# EUROPÄISCHE PATENTANMELDUNG

(11) **EP 2 505 894 A1**
(43) Veröffentlichungstag der Anmeldung: **03.10.2012**
(21) Anmeldenummer: 11160217.3
(22) Anmeldetag: 29.03.2011
(51) Int. Cl.: F16L 21/025, F16L 27/10

(54) **Rohrverbindung aus zwei Röhren**

(71) Anmelder: TPR Fiberdur GmbH & Co. KG, 52457 Aldenhoven (DE)
(72) Erfinder: Focke, Dr.-Ing., Hans-Karl, 52132, Herzogenrath (DE); Wipperfürth, Stephan, 52249, Eschweiler (DE)
(74) Vertreter: Bauer, Dirk

(57) **Zusammenfassung**

Die Erfindung betrifft ein Verfahren zur Herstellung einer Rohrverbindung aus zwei Rohren, von denen ein erstes ein Muffenende und ein zweites ein Spitzende aufweist, wobei
- beide Rohre jeweils eine Längsachse aufweisen und von einer Montageanfangsstellung in eine Montageendstellung zusammengeschoben werden, so dass ein Überlappungsbereich beider Rohre gebildet wird, in dem ein Einsteckbereich des Spitzendes des zweiten Rohres von einem Aufnahmebereich des Muffenendes des ersten Rohres aufgenommen wird, und
- durch eine Überführung in die Montageendstellung in dem Überlappungsbereich ein Dichtungsring platziert wird, der dichtend sowohl an einer äußeren Mantelfläche des Spitzendes des zweiten Rohres als auch an einer inneren Mantelfläche des Muffenendes des ersten Rohres anliegt.

Um ein Verfahren dieser Art dahingehend weiterzuentwickeln, dass eine Richtungsänderung entlang eines Rohrstranges ohne den Einsatz gekrümmter Rohrelemente beziehungsweise sonstiger spezieller Richtungsänderungselemente möglich ist, führt der Dichtungsring (8) während des Zusammenschiebens der beiden Rohre eine Abrollbewegung sowohl an einer mit der inneren Mantelfläche (13) des Muffenendes (4) des ersten Rohres in Berührung kommenden äußeren Kontaktzone des Dichtungsrings (8) als auch an einer mit der äußeren Mantelfläche (9) des Spitzendes (1) des zweiten Rohres in Berührung kommenden inneren Kontaktfläche des Dichtungsrings (8) aus. Der Dichtungsring (8) liegt also im Gegensatz zum Stand der Technik mit seinem vollen Querschnitt zwischen der inneren Mantelfläche (13) des Muffenendes (4) und der äußeren Mantelfläche (9) des Spitzendes (1), deren Abstand voneinander folglich im Vergleich zu bekannten Rohrverbindungen besonders groß ist. Auf diese Weise wird eine Verdrehbarkeit der zu verbindenden Rohre erhöht.

Darüber hinaus betrifft die Erfindung eine Rohrverbindung, die besonders gut geeignet ist, das erfindungsgemäße Verfahren umzusetzen und die dadurch hervorgerufenen Vorteile zu nutzen.

## Beschreibung

### Einleitung

Die Erfindung betrifft ein Verfahren zur Herstellung einer Rohrverbindung aus zwei Rohren, von denen ein erstes ein Muffenende und ein zweites ein Spitzende aufweist, wobei
- beide Rohre jeweils eine Längsachse aufweisen und von einer Montageanfangsstellung in eine Montageendstellung zusammengeschoben werden, so dass ein Überlappungsbereich beider Rohre gebildet wird, in dem ein Einsteckbereich des Spitzendes des zweiten Rohres von einem Aufnahmebereich des Muffenendes des ersten Rohres aufgenommen wird, und
- durch eine Überführung in die Montageendstellung in dem Überlappungsbereich ein Dichtungsring platziert wird, der dichtend sowohl an einer äußeren Mantelfläche des Spitzendes des zweiten Rohres als auch an einer inneren Mantelfläche des Muffenendes des ersten Rohres anliegt.

Darüber hinaus betrifft die Erfindung eine Rohrverbindung umfassend ein erstes, eine Längsachse und ein Muffenende aufweisendes Rohr und ein zweites, eine Längsachse und ein Spitzende aufweisendes Rohr, wobei die beiden Rohre so zusammengeschoben sind, dass sie einen Überlappungsbereich ausbilden, in dem ein Einsteckbereich des Spitzendes des zweiten Rohres von einem Aufnahmebereich des Muffenendes des ersten Rohres aufgenommen ist und wobei in dem Überlappungsbereich ein Dichtungsring angeordnet ist, der dichtend sowohl an einer äußeren Mantelfläche des Spitzendes des zweiten Rohres als auch an einer inneren Mantelfläche des Muffenendes des ersten Rohres anliegt.

### Stand der Technik

Rohrverbindungen der vorgenannten Art sind allgemein bekannt. Beispielsweise im Bereich von Abwasserrohren, welche unter anderem für den Anschluss von Ein- oder Mehrfamilienhäusern an einen Abwasserkanal genutzt werden können, kommen so genannte Hochtemperaturrohre (HT-Rohre) und so genannte Kanalgrundrohre (KG-Rohre) zum Einsatz. Die Verbindung solcher Rohre erfolgt meist unter Verwendung eines so genannten Steckmuffensystems, bei dessen Anwendung die jeweiligen Endabschnitte der zu verbindenden Rohre über die Länge eines Überlappungsbereichs durch die Ausführung einer gegenseitigen Gleitbewegung zusammengeschoben werden. Dabei weist einer dieser Endabschnitte, ein Spitzende, einen gegenüber dem jeweils anderen Endabschnitt, einem Muffenende, einen reduzierten Durchmesser auf, so dass ein Zusammenschieben möglich ist. Die Durchmesserdifferenz zwischen dem Spitz- und dem Muffenende ist bei bekannten Rohrverbindungssystemen bewusst gering gehalten, um eine Abdichtung einer solchen Verbindung zu vereinfachen und einen gewissen - wenngleich lediglich für den Bauzustand hilfreichen - Kraftschluss zu erzeugen.

Der Vorgang des Zusammenschiebens von Spitz- und Muffenende erfolgt in ungefähr fluchtender Ausrichtung zur Längsachse der zu verbindenden Rohre. Eine Abweichung von dieser Ausrichtung ergibt sich lediglich durch Ungenauigkeiten während der Montage. Entsprechend kann es durchaus der Fall sein, dass beim Zusammenschieben die Längsachsen der zu verbindenden Rohre nicht exakt auf einer Geraden liegen, sondern um 1° bis 2° gegeneinander verdreht sind. Dies führt jedoch bereits zu einem erheblichen zusätzlichen Kraftaufwand, um eine durch eine solche Fehlstellung hervorgerufene Verkantung der Endabschnitte der zu verbindenden Rohre zu überwinden. Aus diesem Grund kommen bei heute üblichen Steckmuffensystemen häufig Gleitmittel zum Einsatz, die die Gleitreibung zwischen den Mantelflächen des Spitz- und des Muffenendes herabsetzen und eine Montage auch unter einer geringen Abweichung von einer exakten Fluchtung ermöglichen.

Eine Abdichtung mittels eines Steckmuffensystems verbundener Rohre wird über die Anordnung eines Dichtungsrings beziehungsweise eines sonstigen Dichtungselements realisiert, welches in einer Nut platziert wird, die entweder im Spitzende des zweiten Rohres oder im Muffenende des ersten Rohres angeordnet ist. Durch die Versenkung dieses Dichtungselements in einer solchen Nut wird sichergestellt, dass im Zuge des Vorgangs des Zusammenschiebens von Spitz- und Muffenende der zu verbindenden Rohre das Dichtungselement seine Lage nicht verändert sondern in seiner vorgesehenen Position verbleibt und entsprechend über die jeweilig zu ihm relativ verschobene Mantelfläche des Spitz- oder des Muffenendes gleitet.

Rohrverbindungen dieser Art werden trotz der zur Verbindung und gleichermaßen zur Trennung von Spitz- und Muffenende aufzubringenden axialen Kraft als nicht kraftschlüssig aufgefasst. Rohrleitungen, die unter Anwendung dieses Systems aus Einzelteilen zusammengefügt werden, sind entsprechend nicht als Druckrohre einsetzbar, da die Verbindung lediglich einem geringen inneren Druck standhält. Dennoch sind heute übliche Rohrverbindungen, die beispielsweise mittels besagter Steckmuffensysteme ausgeführt werden, im Überlappungsbereich sehr starr und wenig flexibel. Dies hängt mit der bereits erwähnten geringen Durchmesserdifferenz zwischen Spitz- und Muffenende und dem damit einhergehenden geringen Abstand zwischen der äußeren Mantelfläche des Spitzendes und der inneren Mantelfläche des Muffenendes zusammen. Daraus ergibt sich der Nachteil, dass Richtungsänderungen entlang der Rohrleitung nur anhand dafür vorgesehener gekrümmter Elemente umsetzbar sind und meist auf eine abrupte Art und Weise ausgeführt werden müssen, da eine gewisse gewünschte Richtungsänderung der Rohrleitung entlang eines üblicherweise kurzen Elements vollzogen wird und nicht über größere Längen abgebaut werden kann. Richtungsänderungen durch Verdrehungen der zu verbindenden Rohre im Bereich der Rohrverbindung sind nicht möglich, auch nicht in geringem Maße.

### Aufgabe

Der Erfindung liegt die Aufgabe zugrunde, eine Rohrverbindung der eingangs beschriebenen Art dahingehend weiterzuentwickeln, dass eine Richtungsänderung entlang eines Rohrstranges ohne den Einsatz gekrümmter Rohrelemente beziehungsweise sonstiger spezieller Richtungsänderungselemente möglich ist.

### Lösung

Ausgehend von einem Verfahren der eingangs beschriebenen Art wird die zugrunde liegende Aufgabe erfindungsgemäß dadurch gelöst, dass der Dichtungsring während des Zusammenschiebens der beiden Rohre eine Abrollbewegung sowohl an einer mit der inneren Mantelfläche des Muffenendes des ersten Rohres in Berührung kommenden äußeren Kontaktzone des Dichtungsrings als auch an einer mit der äußeren Mantelfläche des Spitzendes des zweiten Rohres in Berührung kommenden inneren Kontaktfläche des Dichtungsrings ausführt.

Im Unterschied zum Stand der Technik ist also der Dichtungsring während des Zusammenschiebens der beiden Rohre nicht in einer für ihn vorgesehenen Nut platziert, die eine Lageänderung desselben verhindern soll. Stattdessen wird der Dichtungsring zwischen der äußeren Mantelfläche des Spitzendes und der inneren Mantelfläche des Muffenendes angeordnet und im Zuge des Zusammenschiebens von Spitz- und Muffenende aus der Montageanfangsstellung in die Montageendstellung zwischen den Mantelflächen von Spitz- und Muffenende abgerollt. Der Begriff des Zusammenschiebens der jeweiligen Rohrenden ist demnach gemäß des erfindungsgemäßen Verfahrens als eine Schiebebewegung der beiden Rohre zueinander zu verstehen, die eine Abrollbewegung des an beiden Rohren anliegenden Dichtungsrings mit sich bringt, während nach dem Stand der Technik ein solches Zusammenschieben durch ein relatives Gleiten eines Dichtungselements über die Mantelfläche des Spitz- beziehungsweise des Muffenendes beinhaltet.

Unter Verwendung eines solchen Verfahrens, wird der Abstand der Mantelflächen von Spitz-und Muffenende zueinander gegenüber einem nach dem Stand der Technik üblichen Montageverfahren bewusst vergrößert, indem der Dichtungsring vollständig zwischen den Mantelflächen des Spitz- und des Muffenendes platziert wird und nicht mit einem Teil in einer für ihn vorgesehenen Vertiefung eingelassen wird.

Durch eine auf diese Weise vergrößerten Abstand der Mantelflächen des Spitz- und des Muffenendes wird letztendlich eine gegenseitige Verdrehbarkeit der zu verbindenden Rohre ermöglicht. Der zwischen den Mantelflächen angeordnete Dichtungsring erfüllt dabei neben einer Dichtungsfunktion gleichermaßen die Funktion eines Drehgelenkes zwischen den Endabschnitten der Rohre. Auf diese Weise ist es möglich, eine gegenseitige Verdrehung der Endabschnitte der beiden Rohre von bis zu 8° zu realisieren und somit auch ohne herstellerseitig vorgekrümmte Rohrelemente oder spezielle Umlenkelemente eine gewisse Richtungsänderung eines Rohrstranges zu erwirken. Als Anwendungsfall solcher erfindungsgemäßer Rohrverbindungen sei beispielsweise ein externer Kühlwasserkreislauf eines Kraftwerkes genannt, bei dem das Druckniveau hinreichend niedrig ist und über verhältnismäßig große Längen bereits geringe Verdrehungen zwischen zwei zu verbindenden Rohren für eine gewünschte Richtungsänderung des Rohrstranges ausreichend sind, da die erforderlichen Krümmungsradien groß sind.

Bei einer vorteilhaften Ausführung des erfindungsgemäßen Verfahrens sollte die Bewegung des Zusammenschiebens durch ein Anschlagelement begrenzt werden, das an dem Spitzende ausgebildet ist und über dessen äußere Mantelfläche in radiale Richtung vorsteht oder das an dem Muffenende ausgebildet ist und über dessen innere Mantelfläche in radiale Richtung nach innen vorsteht.

Dadurch wird die Montage auf der Baustelle sowie eine gleichbleibende Qualität aller auf diese Weise ausgeführten Rohrverbindungen sichergestellt, da ein eindeutiger Anschlagpunkt definiert ist, der dem Monteur signalisiert, dass die zu verbindenden Rohre optimal weit zusammengeschoben sind und somit der Montageendzustand, d.h. der Betriebszustand, erreicht ist.

Ferner ist eine solche Ausführung des erfindungsgemäßen Verfahrens vorteilhaft, bei der der Dichtungsring während der Abrollbewegung einen ovalen Querschnitt aufweist, der einerseits aufgrund der elastischen Verformbarkeit des Dichtringmaterials die Abrollbewegung nicht wesentlich erschwert und andererseits für die notwendige beidseitige radiale Vorspannung zu Erzielung einer sicheren Abdichtung sorgt.

So sollte einerseits ein innerer Durchmesser des Dichtungsrings bei einem Aufziehen auf die äußere Mantelfläche des Spitzendes gegenüber einem kräftefreien Ausgangszustand aufgedehnt werden, vorzugsweise zwischen 3 % und 7 %, weiter vorzugsweise zwischen 4 % und 6 %.

Eine solche Aufdehnung führt aufgrund der Querdehnung des Materials sowohl zu einer Veränderung der Querschnittsgeometrie des Dichtungsrings von einem Kreis hin zu einem Oval, als auch zu einer damit einhergehenden Zugkraft in Umlaufrichtung des Dichtungsrings, die sich wiederum in einer radial zu einem Mittelpunkt eines durch den Dichtungsring beschriebenen Kreises hin gerichteten Rückstellkraft niederschlägt. Auf diese Weise wird ein fester Sitz des Dichtungsrings auf der äußeren Mantelfläche des Spitzendes sichergestellt, so dass dieser einerseits nicht im Vorfeld des Zusammenschiebens auf unerwünschte Weise verrutscht und sich andererseits bereits eine gewissen Haftwirkung zwischen dem Dichtungsring und der äußeren Mantelfläche des Spitzendes einstellt. Diese Haftwirkung begünstigt den Effekt des Abrollens des Dichtungsrings im Zuge der Überführung der beiden Rohre von der Montageanfangs- in die Montageendstellung.

Andererseits sollte der Querschnitt des Dichtungsrings ausgehend von seinem kräftefreien Ausgangszustand in eine Richtung parallel zu der einer durch den Dichtungsring aufgespannten Mittelebene gestaucht werden, wobei eine Stauchung des Querschnitts zwischen 10 % und 30 %, vorzugsweise zwischen 15 % und 20 % erfolgen sollte.

Eine Stauchung dieser Art wird dadurch hervorgerufen, dass der Abstand zwischen der inneren Mantelfläche des Muffenendes und der äußeren Mantelfläche des Spitzendes in der Montageendstellung der zu verbindenden Rohre geringer ist als der Durchmesser des Dichtungsrings. Das bedeutet, dass der Dichtungsring durch die Mantelflächen von Spitz- und Muffenende mit einer senkrecht auf dem Dichtungsring stehenden Druckkraft beaufschlagt wird, die eine elastische Verformung des Dichtungsringes hervorruft und einen ovalen Querschnitt desselben erzeugt. Diese Verformung wiederum führt zu einer entsprechend orientierten Rückstellkraft des Materials des Dichtungsrings, was zur Folge hat, dass er sich gegen die Mantelflächen verspannt. Dies ist deshalb besonders vorteilhaft, da auf diese Weise die abdichtende Wirkung des Dichtungsringes sichergestellt wird. Ferner wird durch eine solche Rückstellkraft die bereits zuvor beschriebene Haftwirkung zwischen dem Dichtungsring und den Mantelflächen von Spitz- und Muffenende begünstigt, wodurch wiederum die Abrollbewegung des Dichtungsringes im Zuge des Zusammenschiebens der Endabschnitte der beiden Rohre hervorgerufen wird.

Des Weiteren sollte das erfindungsgemäße Verfahren vorzugsweise so durchgeführt werden, dass eine Stirnseite des Spitzendes des zweiten Rohres nur so weit in das Muffenende des ersten Rohres vorgeschoben wird, dass sie außerhalb eines Verjüngungsabschnitts angeordnet ist, in dem sich der Querschnitt des ersten Rohres von einem vergrößerten Muffenquerschnitt auf einen Normalquerschnitt verjüngt, der vorzugsweise mit dem Querschnitt in dem Spitzende übereinstimmt.

Auf diese Weise kann eine maximale Verdrehbarkeit zwischen den beiden zu verbindenden Rohren sichergestellt werden. Ein Vorschub der Stirnseite des Spitzendes des zweiten Rohres bis in den Verjüngungsquerschnitt des ersten Rohres hätte hingegen zur Folge, dass bei dem Versuch einer Verdrehung der Rohre gegeneinander die Stirnseite des zweiten Rohres auf die innere Mantelfläche des ersten Rohres im Verjüngungsabschnitt stößt, bevor die gewünschte Verdrehung vollständig erreicht werden kann. Um einen zu weiten Vorschub der Stirnseite des Spitzendes des zweiten Rohres zu vermeiden, ist vorzugsweise ein bereits erwähntes Anschlagelement an entsprechend gewählten Orten an einem der Rohre vorzusehen.

Korrespondierend zu dem erfindungsgemäßen Verfahren, wird die zugrunde liegende Aufgabe ausgehend von einer Rohrverbindung der eingangs beschriebenen Art erfindungsgemäß dadurch gelöst, dass der Dichtungsring in einer Montageendstellung einen ovalen Querschnitt aufweist, dessen größerer Durchmesser ungefähr parallel zu den Längsachsen der beiden Rohre verläuft, und von einer Stirnseite des Muffenendes und/oder des Spitzendes her entlang der inneren Mantelfläche des Muffenendes und/oder der äußeren Mantelfläche des Spitzendes in die Montageendstellung rollbar ist, wobei der Dichtungsring während der Abrollbewegung mit gegenüberliegenden Kontaktflächen, deren Abstand voneinander einem kleineren Durchmesser des Querschnitts des Dichtungsrings entspricht, sowohl mit einer inneren Mantelfläche des Muffenendes des ersten Rohres als auch mit einer äußeren Mantelfläche des Spitzendes des zweiten Rohres in Berührung kommt.

Das erfindungsgemäße Verfahren ist unter Verwendung einer solchen erfindungsgemäßen Rohrverbindung besonders einfach durchführbar.

Diese sollte ferner so ausgebildet sein, dass die äußere Mantelfläche des Spitzendes des zweiten Rohres und die innere Mantelfläche des Muffenendes des ersten Rohres jeweils einen Rollabschnitt aufweisen, der eine in Richtung der jeweiligen Längsachse des Rohres gemessene Länge aufweist, die mindestens der Hälfte der axialen Länge des Überlappungsbereichs entspricht, wobei vorzugsweise sowohl der Durchmesser des zweiten Rohres in dessen Rollabschnitt in Richtung der Längsachse des Rohres betrachtet konstant ist und/oder der Durchmesser des ersten Rohres in dessen Rollabschnitt in Richtung der Längsachse des ersten Rohres betrachtet konstant ist.

Die Ausbildung von Rollabschnitten in den beschriebenen in Richtung der jeweiligen Längsachsen gemessenen minimalen Längen der halben axialen Länge des Überlappungsbereichs sowohl am Spitzende des zweiten als auch am Muffenende des ersten Rohres stellt sicher, dass der Dichtungsring eine ausreichend lange Strecke zur Verfügung hat, um im Zuge des Zusammenschiebens der beiden Rohre durchgehend eine Rollbewegung ausführen zu können. So ist unter der Annahme einer optimalen Anordnung des Dichtungsringes auf der äußeren Mantelfläche direkt an der Stirnseite des Spitzendes folglich mindestens eine axiale Länge der Rollabschnitte beider Rohre von der Hälfte der axialen Länge des späteren vollständigen Überlappungsbereichs notwendig, da bei einer idealen Abrollbewegung seitens des Dichtungsringes auf den Mantelflächen von Spitz- und Muffenende selbiger eine solche Strecke auf besagten Mantelflächen zurücklegt, die einer Zunahme eines Abstandes zwischen der Mittelebene des Dichtungsrings und den jeweiligen Stirnseiten von Spitz- beziehungsweise Muffenende entspricht. Die axiale Länge des Überlappungsbereichs hingegen, die als Abstand zwischen den Stirnseiten selbst definiert ist, nimmt während der Überführung der beiden Rohre von der Montageanfangsstellung in die Montageendstellung doppelt so schnell zu, wie besagte Abstände zwischen der Mittelebene des Dichtungsrings und den jeweiligen Stirnseiten von Spitz- und Muffenende. Um eine vollständige Ausbildung des Überlappungsbereichs zu erzielen, sollte folglich mindestens die Hälfte der axialen Länge dieses Überlappungsbereich als minimale Länge der Rollabschnitte auf beiden Rohren vorgesehen werden.

Eine überdies konstante Ausbildung mindestens eines der Durchmesser der beiden Rohre über die Länge des jeweiligen Rollabschnitts in axiale Richtung des jeweiligen Rohres, vorzugsweise eine konstante Ausbildung der Durchmesser beider Rohre über besagte Länge, ist ferner vorteilhaft, da der Vorgang des Zusammenschiebens des Spitz- und des Muffenendes für den Fall einer Durchmesserveränderung eines oder beider Rohre in einer solchen Weise, dass der Abstand zwischen den Mantelflächen beider Rohre reduziert wird, ohne eine inakzeptabel hohe Krafteinwirkung seitens eines Monteurs auf die Rohre möglich ist. Darüber hinaus würde die gegenseitige Verdrehbarkeit der zu verbindenden Rohre negativ beeinflusst. Der Fall einer Durchmesserveränderung eines oder beider Rohre, dahingehend, dass sich der Abstand zwischen den Mantelflächen beider Rohre erhöht, ist ebenso vorteilhafterweise über die Länge der Rollabschnitte zu vermeiden, da ein Anpressdruck des ovalen Dichtungsrings an die entsprechenden Mantelflächen von Spitz- und Muffenende abnehmen würde, wodurch einerseits die dichtende Wirkung des Dichtungsringes herabgesetzt und andererseits die für eine Abrollbewegung seitens des Dichtungsrings vorteilhafte Haftreibung zwischen dem Dichtungsring und den entsprechenden Mantelflächen reduziert würde.

Eine erfindungsgemäße Rohrverbindung ist ferner dann besonders gut geeignet das erfindungsgemäße Verfahren umzusetzen, wenn ein Anschlagelement vorgesehen wird, das an dem Spitzende des zweiten Rohres ausgebildet ist und über dessen äußere Mantelfläche in radiale Richtung vorsteht oder das an dem Muffenende des ersten Rohres ausgebildet ist und über dessen innere Mantelfläche in radiale Richtung nach innen vorsteht, wobei das Anschlagelement integral mit dem jeweiligen Rohr ausgeformt ist, oder mit dem jeweiligen Rohr kraftschlüssig, formschlüssig oder stoffschlüssig verbunden ist.

Ein solches Anschlagelement sollte dabei vorteilhafterweise so ausgebildet sein, dass das es eine in radiale Richtung gemessene Dicke aufweist, die maximal der halben Differenz zwischen dem Innendurchmesser des ersten Rohres in dem Muffenende und dem Außendurchmesser des zweiten Rohres in dem Spitzende entspricht.

Sollte die Dicke des Anschlagelements einen solchen maximalen Wert übersteigen, so wäre ein Einführen des Spitzendes des zweiten Rohres in das Muffenende des ersten Rohres nicht länger möglich, da die Summe aus dem Außendurchmesser des Spitzendes des zweiten Rohres und der Dicke eines umlaufenden Anschlagelements, die eine halbe Durchmesserdifferenz zwischen dem Innendurchmesser des ersten Rohres in dem Muffenende und dem Außendurchmesser des zweiten Rohres in dem Spitzende übersteigt, einen Wert annimmt, der größer ist als der Innendurchmesser des ersten Rohres in dem Muffenende. Die Dicke des Anschlagelements sollte entsprechend maximal besagter halber Durchmesserdifferenz entsprechen. Vorzugsweise sollte die Dicke geringer gewählt werden, um weiterhin eine gegenseitige Verdrehbarkeit der zu verbindenden Rohre zu ermöglichen, wenngleich die Dicke nicht so gering gewählt werden sollte, dass ein "Überrollen" des Dichtungsrings über das Anschlagelement ohne besondere Krafteinwirkung durch einen Monteur verursacht werden könnte.

Die Rohrverbindung ist außerdem vorzugsweise so auszubilden, dass eine Differenz zwischen einem Außendurchmesser des Spitzendes des zweiten Rohres und einem Innendurchmesser des Muffenendes des ersten Rohres so groß ist, dass in einer Montageendstellung des Dichtungsrings ein Verschwenken der beiden Rohre um eine durch eine Mittelebene, die durch den Dichtungsring aufgespannt wird, verlaufende Schwenkachse um einen Schwenkwinkel von mindestens 2°, vorzugsweise mindestens 3°, weiter vorzugsweise mindestens 4° ermöglicht.

Eine so ausgebildete Rohrverbindung vermag die zugrunde liegende Aufgabe besonders gut zu lösen.

Bei einer ferner vorteilhaften Ausbildung der erfindungsgemäßen Rohrverbindung sollte die innere Mantelfläche des Muffenendes und/oder die äußere Mantelfläche des Spitzsendes eine Rauheit von weniger als 150 µm, vorzugsweise eine Rauheit von weniger als 100 µm aufweisen.

Durch eine beziehungsweise zwei auf diese Weise beschaffene Mantelflächen der Endabschnitte der zu verbindenden Rohre wird die zuvor beschriebene Abrollbewegung des Dichtungsrings, die während der Überführung der beiden Rohre von der Monateanfangsstellung in die Montageendstellung stattfindet, dahingehend unterstützt, dass bei einer Zusammenwirkung einer wenig rauen beziehungsweise glatten Oberfläche und dem Dichtungsring eine gegenüber einer Zusammenwirkung einer rauen Oberfläche und dem Dichtungsring hohe Haftreibung besteht. Durch die Ausbildung einer hohen Haftkraft zwischen dem Dichtungsring und einer entsprechend glatten inneren Mantelfläche des Muffenendes und/oder äußeren Mantelfläche des Spitzendes wird der zur Durchführung des offenbarten Verfahrens notwendige Effekt des Abrollens des Dichtungsrings im Zuge der Montage der Rohrverbindung begünstigt und der unerwünschte Effekt eines Schiebens des Dichtungsrings über besagte Mantelflächen unterbunden.

Weiterhin von Vorteil ist eine Ausführung der erfindungsgemäßen Rohrverbindung in einer solchen Form, dass die Rohre aus faserverstärktem Kunststoff hergestellt sind, vorzugsweise aus einer Kombination aus Rovings aus Fasern und einem Harz, der ein Mischungsverhältnis von Harz zu Fasern von vorzugsweise mindestens 25 zu 100, weiter vorzugsweise von mindestens 35 zu 100 aufweist.

Die Herstellung der Rohre - und damit einhergehend der Rohrverbindung - aus faserverstärktem Kunststoff stellt deshalb eine günstige Wahl dar, da besagter Werkstoff bei seinem geringen spezifischen Gewicht und seiner hohen Festigkeit gleichzeitig im Herstellungsprozess eine hohe Flexibilität bezüglich der herzustellenden Formen und Geometrien erlaubt. Die Ausbildung eines erweiterten Querschnitts eines Rohres im Bereich des Muffenendes inklusive eines Verjüngungsabschnitts, der den Übergang zwischen dem Querschnitt des Muffenendes und dem normalen Rohrquerschnitt bildet, ist unter Verwendung von faserverstärktem Kunststoff entsprechend leicht auszuführen. Die einzelnen Abschnitte müssen darüber hinaus nicht aus Einzelteilen zusammengesetzt werden, sondern können direkt aus einem Stück hergestellt werden. Dazu werden Rovings aus Fasern um ein Negativ des herzustellenden Rohres, welches vorzugsweise aus Stahl gefertigt ist, gewickelt. Anschließend wird eine Matrix, die die Fasern miteinander verbindet, aus einem Harz hergestellt, indem selbiges über das mit Rovings umwickelte Negativ gegossen wird.

Entsprechend vorangegangener Erläuterung ist eine solche Ausbildung der Endabschnitte der zu verbindenden Rohre vorteilhaft, bei der sowohl der Endabschnitt des Spitzendes des zweiten Rohres als auch der Endabschnitt des Muffenendes des ersten Rohres über eine Länge, die mindestens der axialen Länge des Überlappungsbereichs entspricht, eine Glattheitsschicht aufweisen, die vorzugsweise aus faserverstärktem Kunststoff hergestellt ist und vorzugsweise ein Mischungsverhältnis von Harz zu Fasern von 25 zu 100, weiter vorzugsweise von 35 zu 100 aufweist, wobei die Glattheitsschicht eine Dicke von maximal 0,4 mm, weiter vorzugsweise eine Dicke von maximal 0,3 mm aufweist.

Eine solche Glattheitsschicht weist eine besonders geringe Rauheit auf, die, wie erläutert, eine Haftwirkung zwischen dem Dichtungsring und den Mantelflächen von Spitz- und Muffenende begünstigt. Die Anwendung des genannten Mischungsverhältnisses zur Herstellung der Glattheitsschicht ist dabei besonders geeignet, um eine hohe Glattheit besagter Schicht zu erreichen. Dabei wird vorteilhafterweise lediglich ein dünnes Kunststoffvlies auf die jeweiligen Endabschnitte der zu verbindenden Rohre gelegt und anschließend mit Harz übergossen. Die Kunststofffasern übernehmen dabei keine Funktion hinsichtlich der Festigkeit oder Stabilität der Glattheitsschicht, sondern dienen nur der Bindung des Harzes, so dass dieses kontrolliert aufgetragen werden kann und an einem für ihn vorgesehen Ort verbleibt und vor der Aushärtung nicht wegfließt.

Um die Funktion der Erzeugung einer glatten Oberfläche zu erfüllen, ist keine besondere Dicke der Glattheitsschicht notwendig. Aus Kostengründen sollte diese daher so gering wie möglich gehalten werden, um im Übrigen ein in Kosten- und Festigkeitshinsicht optimales Harz-Faser-Verhältnis zu realisieren.

Der zur Realisierung einer erfindungsgemäßen Rohrverbindung notwendige Dichtungsring ist dann besonders vorteilhaft, wenn er eine Härte aufweist, die einer Shore-Härte von vorzugsweise mindestens 20 Shore und höchstens 90 Shore, weiter vorzugsweise von mindestens 40 Shore und höchstens 70 Shore, entspricht.

Ein Dichtungsring mit einem Härtegrad, der in diesen Grenzen liegt, ist bezüglich der Haftwirkung zwischen dem Dichtungsring und den mit ihm in Kontakt tretenden Mantelflächen der beiden Rohre besonders von Vorteil.

Um das Auftreten der Abrollbewegung des Dichtungsrings im Zuge der Überführung der beiden Rohre von der Montageanfangs- in die Montageendstellung sicherzustellen, ist ferner eine solche Kombination der Materialien und Oberflächenbeschaffenheiten des Dichtungsrings und der inneren Mantelfläche des Muffenendes beziehungsweise der äußeren Mantelfläche des Spitzendes besonders geeignet, dass zwischen dem Dichtungsring und der äußeren Mantelfläche des Spitzendes des zweiten Rohres und/oder zwischen dem Dichtungsring und der inneren Mantelfläche des Muffenendes des ersten Rohres eine Haftreibungszahl von mindestens 0,3, vorzugsweise von mindestens 0,4 vorliegt.

Um eine hinreichende Verdrehbarkeit bzw. Verschwenkbarkeit der Rohre zueinander zu erzielen, sollte die Durchmesserdifferenz zwischen dem Spitz- und dem Muffenende mindestens 2,0 %, vorzugsweise mindestens 4,5 %, des Durchmessers des Spitzendes betragen.

### Ausführungsbeispiele

Die erfindungsgemäße Rohrverbindung wird nachfolgend anhand eines Ausführungsbeispiels, das in den Zeichnungen dargestellt ist, näher erläutert. Es zeigt:
- Fig. 1:: ein Muffenende einer erfindungsgemäßen Rohrverbindung
- Fig. 2:: ein Spitzende einer erfindungsgemäßen Rohrverbindung,
- Fig. 3 - 5:: die Montage einer erfindungsgemäßen Rohrverbindung ausgehend von einer Montageanfangsstellung bis hin zu einer Montageendstellung,
- Fig. 6:: eine erfindungsgemäße Rohrverbindung aus gegeneinander verdrehten Endabschnitten zweier Rohre und
- Fig. 7:: eine isometrische Darstellung einer fertig montierten erfindungsgemäßen Rohrverbindung.

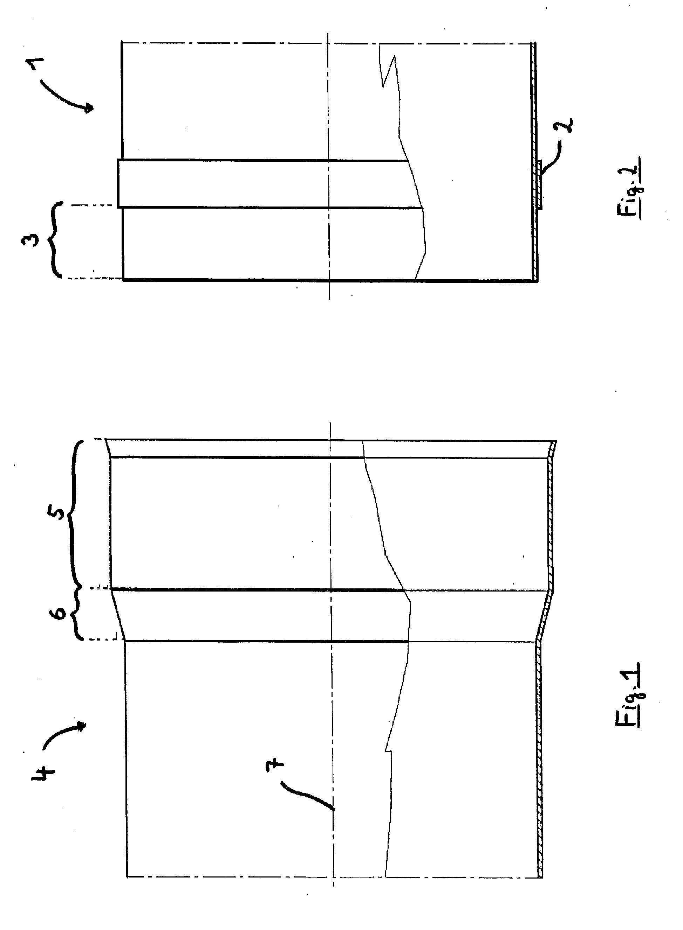

Figur 1 zeigt ein Muffenende 4 eines nicht in seiner Gesamtheit dargestellten ersten Rohres. Entlang eines Rollabschnitts 5 besitzt es einen Innendurchmesser von etwa 320 mm. Der Rollabschnitt 5 weist im dargestellten Beispiel eine in axiale Richtung des Rohres gemessene Länge von 95 mm auf. Auf einer einem Rohrende abgewandten Seite des Rollabschnitts 5 des Muffenendes 4 wird anhand eines Verjüngungsabschnitts 6 der Innendurchmesser des ersten Rohres auf einen einem zweiten Rohr gleichen Wert von 300 mm reduziert. Diese Reduktion erfolgt über eine Anschrägung einer Außenwand des ersten Rohres, die im dargestellten Beispiel mit einer Längsachse 7 des ersten Rohres einen Winkel von 15,0° einschließt.

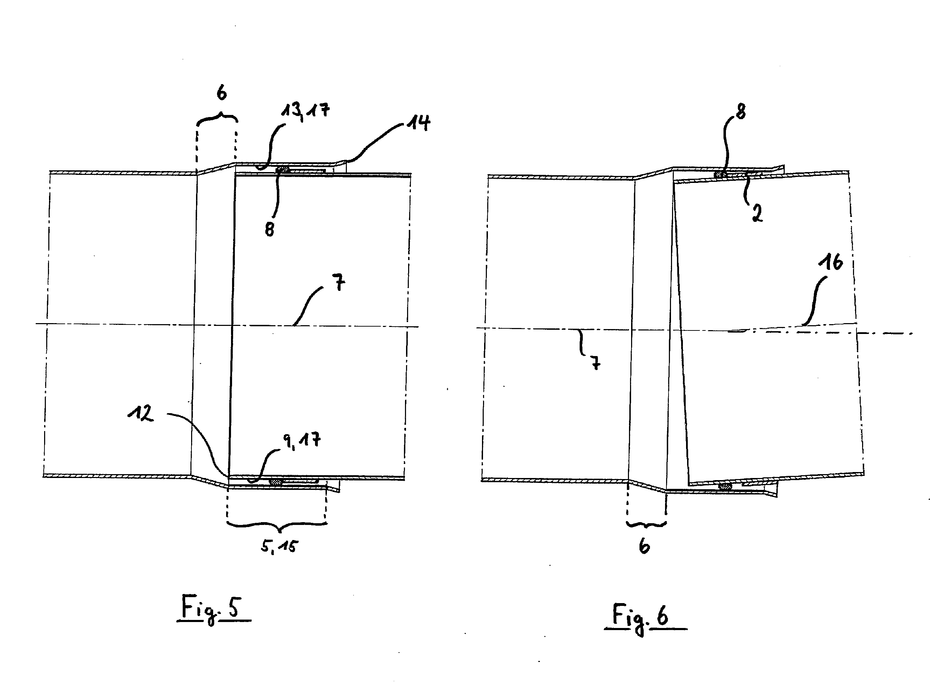

Figur 2 zeigt ein Spitzende 1 eines nicht in seiner Gesamtheit dargestellten zweiten Rohres. Ein Innendurchmesser dieses Spitzendes 1 beträgt im dargestellten Beispiel 300 mm, ein Außendurchmesser beträgt etwa 306 mm. In einem axial in Richtung des Rohres gemessenen Abstand von 52 mm ist ein integral mit dem zweiten Rohr ausgebildetes Anschlagelement 2 angeordnet, dessen Funktion anhand von Figur 5 noch erläutert wird. Ein durch eine Länge dieses Abstandes definierter Abschnitt des Spitzendes 1 wird im Folgenden als Rollabschnitt 3 bezeichnet.

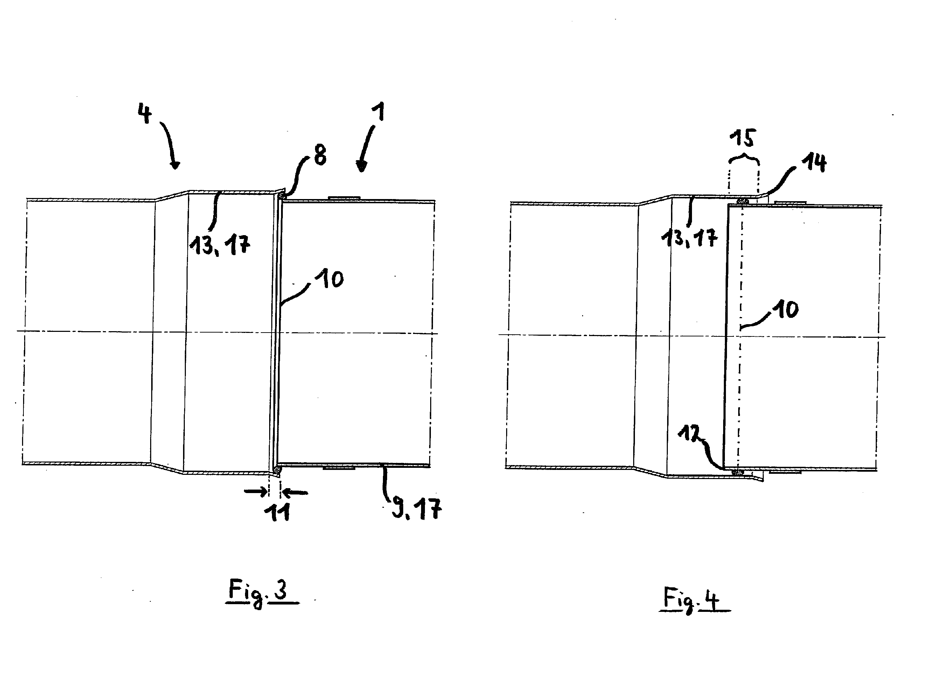

In Figur 3 ist sowohl das Spitzende 1 des zweiten Rohres als auch das Muffenende 4 des ersten Rohres abgebildet. Beide Rohre befinden sich in einer Montageanfangsstellung. Bevor das Spitzende 1 und das Muffenende 4 in diese Montageanfangsstellung gebracht werden, wird ein Dichtungsring 8 auf eine äußere Mantelfläche 9 des Spitzendes 1 aufgezogen. Ein Innendurchmesser eines kräftefreien Dichtungsrings 8 ist gegenüber dem Innendurchmesser des Spitzendes 1 minimal reduziert, so dass der Dichtungsring 8 aufgedehnt werden muss, um auf die Mantelfläche 9 in der dargestellten Art aufgezogen zu werden. Durch eine solche Aufdehnung bildet sich eine radial in eine Mitte einer durch den Dichtungsring 8 aufgespannten Mittelebene 10 gerichtete Rückstellkraft, die den Dichtungsring 8 gegen die Mantelfläche 9 verspannt und ihn auf diese Weise sowohl gegen ein ungewolltes Verrutschen sichert als auch dazu dient, eine gewisse Haftreibung zwischen dem Dichtungsring 8 und der Mantelfläche 9 zu erzeugen. Der Dichtungsring 8 ist gemeinsam mit dem Spitzende 1 in einen Aufnahmebereich 11 des Muffenendes eingebracht. Dieser Aufnahmebereich 11 dient einer Erleichterung einer Montage einer erfindungsgemäßen Rohrverbindung.

Beide Enden, sowohl das Spitzende 1 als auch das Muffenende 4, weisen entlang ihrer Rollabschnitte 3 und 5 eine Glattheitsschicht 17 auf. Diese ist bei dem Spitzende 1 auf die Mantelfläche 9 und bei dem Muffenende 4 auf eine innere Mantelfläche 13 aufgebracht. Sie ist von besonderer Bedeutung für die Ausbildung einer Haftwirkung zwischen dem Dichtungsring 8 und den jeweiligen Mantelflächen 9 und 13, die dazu führt, dass der Dichtungsring 8 im Zuge einer Überführung des ersten und des zweiten Rohres von der Montageanfangsstellung. in eine Montageendstellung eine Abrollbewegung vollzieht und entsprechend eine Gleitung unterbunden wird.

Figur 4 zeigt eine Mittelstellung zwischen der Montageanfangs- und der Montageendstellung des ersten und des zweiten Rohres. Der Dichtungsring 8 hat seine in Figur 3 dargestellte Position auf der Mantelfläche 9 an einer Stirnseite 12 des Spitzendes 1 beziehungsweise seine Position auf der inneren Mantelfläche 13 an einer Stirnseite 14 des Muffenendes 4 verlassen und ist durch ein Zusammenschieben des ersten und des zweiten Rohres auf den Mantelflächen 9 und 13 in jeweils den Stirnseiten 12 und 14 abgewandten Richtungen des Spitzendes 1 beziehungsweise des Muffenendes 4 abgerollt. Anhand dieses Zusammenschiebens der beiden Rohre spannt sich ein Überlappungsbereich 15 auf, der sich von der Stirnseite 12 des Spitzendes 1 bis zu einem der Stirnseite 14 des Muffenendes 4 zugewandten Ende des Rollabschnitts 5 des Muffenendes 4 erstreckt. Dieser Überlappungsbereich 15 weist stets eine in Richtung der Längsachse 7 gemessene Länge auf, die einem doppelten Abstand von der Mittelebene 10 bis zur Stirnseite 12 des Spitzendes 1 entspricht.

Der Dichtungsring 8 weist in der gezeigten Mittelstellung einen ovalen Querschnitt auf. Dieser ovale Querschnitt resultiert aus einer Stauchung, die der Dichtungsring 8 erfährt. Diese Stauchung entsteht dadurch, dass der Dichtungsring 8 in einem kräftefreien Zustand einen Durchmesser aufweist, der größer ist, als die halbe Differenz zwischen dem Außendurchmesser des Spitzendes 1 des zweiten Rohres und dem Innendurchmesser des Rollabschnitts 5 des Muffenendes 4 des ersten Rohres. Der Abstand der Mantelflächen 9 und 13 in gezeigter Mittelstellung ist demnach kleiner, als der Durchmesser des Dichtungsrings 8 im kräftefreien Zustand. Entsprechend muss der Dichtungsring 8 seine Form von einem ungefähr kreisförmigen Querschnitt - wie dargestellt - hin zu einem ovalen Querschnitt auf eine solche Art und Weise verändern, dass sein großer Durchmesser ungefähr parallel zur Längsachse 7 des Muffenendes 4 verläuft und sein kleiner Durchmesser entsprechend ungefähr in der Mittelebene 10 liegt. Durch diese Stauchung, die eine elastische Verformung des Dichtungsrings 8 darstellt, werden Rückstellkräfte im Dichtungsring 8 aktiviert, die ihn gegen die Mantelflächen 9 und 13 verspannen. Auf diese Weise wird erzielt, dass der Dichtungsring 8 eine Dichtungsfunktion ausübt, indem er gegen die Mantelflächen 9 und 13 drückt und so ein Passieren von in den Rohren enthaltener Medien unterbindet. Des Weiteren begünstigt ein Verspannen des Dichtungsrings 8 gegen die äußere Mantelfläche 9 des Spitzendes 1 und die innere Mantelfläche 13 des Muffenendes 4 eine Haftwirkung zwischen dem Dichtungsring 8 und den Mantelflächen 9 und 13. Dadurch wird ein Auftreten einer Gleitung des Dichtungsrings 8 über die Mantelflächen 9 und 13 unterbunden und stattdessen eine Abrollbewegung erzwungen.

Figur 5 zeigt schließlich die Montageendstellung des ersten und des zweiten Rohres. Das Spitzende 1 und das Muffenende 4 sind so weit ineinander geschoben worden, dass der Dichtungsring 8 an dem Anschlagelement 2 angeschlagen ist. Dieses Anschlagelement 2 verhindert, dass das Spitzende 1 fälschlicherweise während der Montage zu weit in das Muffenende 4 geschoben wird. Es ist so angeordnet, dass die Stirnseite 12 des Spitzendes 1 gerade bis zu einer der Stirnseite 14 des Muffenendes 4 zugewandten Seite des Verjüngungsabschnitts 6 reicht und selbst nicht bis in den Verjüngungsabschnitt 6 vorstößt. Auf diese Weise kann sichergestellt werden, dass das erste und das zweite Rohr nicht durch den Verjüngungsabschnitt 6 an einer gegenseitigen Verdrehung gehindert werden. Eine Dicke des Anschlagelements 2 entspricht im dargestellten Beispiel ungefähr einer Hälfte eines Abstandes zwischen den Mantelflächen 9 und 13 des Spitzendes 1 beziehungsweise des Muffenendes 4. Ihr maximaler Wert darf nicht größer sein, als ein vollständiger Abstand zwischen den Mantelflächen 9 und 13, da ansonsten das Spitzende 1 nicht in das Muffenende 4 eingeführt werden kann. In der dargestellten Montageendstellung entspricht eine Länge des Rollabschnitts 5 einer Länge des Überlappungsbereichs 15.

Aus Figur 6 geht des Weiteren hervor, dass eine Wahl der Dicke des Anschlagelements 2 eine Auswirkung auf eine gegenseitige Verdrehbarkeit des zweiten Rohres gegenüber dem ersten Rohr hat. So zeigt Figur 6, dass eine Längsachse 16 des Spitzendes 1 des ersten Rohres gegen die Längsachse 7 des Muffenendes 4 des zweiten Rohes um einen Betrag von 4° verdreht ist. In dieser Konfiguration stößt das Anschlagelement 2 an die innere Mantelfläche 13 des Rollabschnitts 5 des Muffenendes 4 und unterbindet so eine Verdrehung um einen größeren Winkel. Der Dichtungsring 8 wirkt bei der Verdrehung als ein Drehgelenk, um das sich die beiden Rohre gegeneinander verdrehen. Trotz der Verdrehung um 4° liegt der Dichtungsring 8 nach wie vor in einem gestauchten Zustand vor und erfüllt entsprechend weiterhin seine abdichtende Wirkung.

### Bezugszeichenliste

- 1: Spitzende
- 2: Anschlagelement
- 3: Rollabschnitt
- 4: Muffenende
- 5: Rollabschnitt
- 6: Verjüngungsabschnitt
- 7: Längsachse
- 8: Dichtungsring
- 9: Mantelfläche
- 10: Mittelebene
- 11: Aufnahmebereich
- 12: Stirnseite
- 13: Mantelfläche
- 14: Stirnseite
- 15: Überlappungsbereich
- 16: Längsachse
- 17: Glattheitsschicht

## Patentansprüche

1. Verfahren zur Herstellung einer Rohrverbindung aus zwei Rohren, von denen ein erstes ein Muffenende (4) und ein zweites ein Spitzende (1) aufweist, wobei
- beide Rohre jeweils eine Längsachse (7, 16) aufweisen und von einer Montageanfangsstellung in eine Montageendstellung zusammengeschoben werden, so dass ein Überlappungsbereich (15) beider Rohre gebildet wird, in dem ein Einsteckbereich des Spitzendes (1) des zweiten Rohres von einem Aufnahmebereich (11) des Muffenendes (4) des ersten Rohres aufgenommen wird, und
- durch eine Überführung in die Montageendstellung in dem Überlappungsbereich (15) ein Dichtungsring (8) platziert wird, der dichtend sowohl an einer äußeren Mantelfläche (9) des Spitzendes (1) des zweiten Rohres als auch an einer inneren Mantelfläche (13) des Muffenendes (4) des ersten Rohres anliegt,
**dadurch gekennzeichnet, dass**
- der Dichtungsring (8) während des Zusammenschiebens der beiden Rohre eine Abrollbewegung sowohl an einer mit der inneren Mantelfläche (13) des Muffenendes (4) des ersten Rohres in Berührung kommenden äußeren Kontaktzone des Dichtungsrings (8) als auch an einer mit der äußeren Mantelfläche (9) des Spitzendes (1) des zweiten Rohres in Berührung kommenden inneren Kontaktfläche des Dichtungsrings (8) ausführt.

2. Verfahren nach Anspruch 1, **dadurch gekennzeichnet, dass** die Bewegung des Zusammenschiebens durch ein Anschlagelement (2) begrenzt wird, das an dem Spitzende (1) ausgebildet ist und über dessen äußere Mantelfläche (9) in radiale Richtung vorsteht oder das an dem Muffenende (4) ausgebildet ist und über dessen innere Mantelfläche (13) in radiale Richtung nach innen vorsteht.

3. Verfahren nach Anspruch 1 oder 2, **dadurch gekennzeichnet, dass** der Dichtungsring (8) während der Abrollbewegung einen ovalen Querschnitt aufweist.

4. Verfahren nach einem der Ansprüche 1 bis 3, **dadurch gekennzeichnet, dass** ein innerer Durchmesser des Dichtungsrings (8) bei einem Aufziehen auf die äußere Mantelfläche (9) des Spitzendes (1) gegenüber einem kräftefreien Ausgangszustand aufgedehnt wird, vorzugsweise zwischen 5 % und 10 %, weiter vorzugsweise zwischen 6 % und 8%.

5. Verfahren nach einem der Ansprüche 1 bis 4, **dadurch gekennzeichnet, dass** der Querschnitt des Dichtungsrings (8) ausgehend von seinem kräftefreien Ausgangszustand in eine Richtung parallel zu der einer durch den Dichtungsring (8) aufgespannten Mittelebene (10) gestaucht wird, wobei eine Stauchung des Querschnitts zwischen 10 % und 30 %, vorzugsweise zwischen 15 % und 20 % erfolgt.

6. Verfahren nach einem der Ansprüche 1 bis 5, **dadurch gekennzeichnet, dass** eine Stirnseite (12) des Spitzendes (1) des zweiten Rohres nur so weit in das Muffenende (4) des ersten Rohres vorgeschoben wird, dass sie außerhalb eines Verjüngungsabschnitts (6) angeordnet ist, in dem sich der Querschnitt des ersten Rohres von einem vergrößerten Muffenquerschnitt auf einen Normalquerschnitt verjüngt, der vorzugsweise mit dem Querschnitt in dem Spitzende (1) übereinstimmt.

7. Rohrverbindung umfassend ein erstes, eine Längsachse (7) und ein Muffenende (4) aufweisendes Rohr und ein zweites, eine Längsachse (16) und ein Spitzende (1) aufweisendes Rohr, wobei die beiden Rohre so zusammengeschoben sind, dass sie einen Überlappungsbereich (15) ausbilden, in dem ein Einsteckbereich des Spitzendes (1) des zweiten Rohres von einem Aufnahmebereich (11) des Muffenendes (4) des ersten Rohres aufgenommen ist und wobei in dem Überlappungsbereich (15) ein Dichtungsring (8) angeordnet ist, der dichtend sowohl an einer äußeren Mantelfläche (9) des Spitzendes (1) des zweiten Rohres als auch an einer inneren Mantelfläche (13) des Muffenendes (4) des ersten Rohres anliegt, **dadurch gekennzeichnet, dass** der Dichtungsring (8) in einer Montageendstellung einen ovalen Querschnitt aufweist, dessen größerer Durchmesser ungefähr parallel zu den Längsachsen (7, 16) der beiden Rohre verläuft, und von einer Stirnseite (12, 14) des Muffenendes (4) und/oder des Spitzendes (1) her entlang der inneren Mantelfläche (13) des Muffenendes (4) und/oder der äußeren Mantelfläche (9) des Spitzendes (1) in die Montageendstellung rollbar ist, wobei der Dichtungsring (8) während der Abrollbewegung mit gegenüberliegenden Kontaktflächen, deren Abstand voneinander einem kleineren Durchmesser des Querschnitts des Dichtungsrings (8) entspricht, sowohl mit einer inneren Mantelfläche (13) des Muffenendes (4) des ersten Rohres als auch mit einer äußeren Mantelfläche (9) des Spitzendes (1) des zweiten Rohres in Berührung kommt.

8. Rohrverbindung nach Anspruch 7, **dadurch gekennzeichnet, dass** die äußere Mantelfläche (9) des Spitzendes (1) des zweiten Rohres und die innere Mantelfläche (13) des Muffenendes (4) des ersten Rohres jeweils einen Rollabschnitt aufweisen, der eine in Richtung der jeweiligen Längsachse (7, 16) des Rohres gemessene Länge aufweist, die mindestens der Hälfte der axialen Länge des Überlappungsbereichs (15) entspricht, wobei vorzugsweise sowohl der Durchmesser des zweiten Rohres in dessen Rollabschnitt (3) in Richtung der Längsachse (16) des Rohres betrachtet konstant ist und/oder der Durchmesser des ersten Rohres in dessen Rollabschnitt (5) in Richtung der Längsachse (7) des zweiten Rohres betrachtet konstant ist.

9. Rohrverbindung nach Anspruch 7 oder 8, **gekennzeichnet durch** ein Anschlagelement (2), das an dem Spitzende (1) des zweiten Rohres ausgebildet ist und über dessen äußere Mantelfläche (9) in radiale Richtung vorsteht oder das an dem Muffenende (4) des ersten Rohres ausgebildet ist und über dessen innere Mantelfläche (13) in radiale Richtung nach innen vorsteht, wobei das Anschlagelement (2) integral mit dem jeweiligen Rohr ausgeformt ist, oder mit dem jeweiligen Rohr kraftschlüssig, formschlüssig oder stoffschlüssig verbunden ist.

10. Rohrverbindung nach Anspruch 9, **dadurch gekennzeichnet, dass** das Anschlagelement (2) eine in radiale Richtung gemessene Dicke aufweist, die maximal der halben Differenz zwischen dem Innendurchmesser des ersten Rohres in dem Muffenende (4) und dem Außendurchmesser des zweiten Rohres in dem Spitzende (1) entspricht.

11. Rohrverbindung nach einem der Ansprüche 7 bis 9, **dadurch gekennzeichnet, dass** eine Differenz zwischen einem Außendurchmesser des Spitzendes (1) des zweiten Rohres und einem Innendurchmesser des Muffenendes (4) des ersten Rohres so groß ist, dass in einer Montageendstellung des Dichtungsrings (8) ein Verschwenken der beiden Rohre um eine durch eine Mittelebene (10), die durch den Dichtungsring (8) aufgespannt wird, verlaufende Schwenkachse um einen Schwenkwinkel von mindestens 2°, vorzugsweise mindestens 3°, weiter vorzugsweise mindestens 4° ermöglicht.

12. Rohrverbindung nach einem der Ansprüche 7 bis 11, **dadurch gekennzeichnet, dass** die innere Mantelfläche (13) des Muffenendes (4) und/oder die äußere Mantelfläche (9) des Spitzsendes (1) eine Rauheit von weniger als 150 µm, vorzugsweise eine Rauheit von weniger als 100 µm aufweisen.

13. Rohrverbindung nach einem der Ansprüche 7 bis 12, **dadurch gekennzeichnet, dass** die Rohre aus faserverstärktem Kunststoff hergestellt sind, vorzugsweise aus einer Kombination aus Rovings aus Fasern und einem Harz, der ein Mischungsverhältnis von Harz zu Fasern von vorzugsweise mindestens 25 zu 100, weiter vorzugsweise von mindestens 35 zu 100 aufweist.

14. Rohrverbindung nach Anspruch 13, **dadurch gekennzeichnet, dass** sowohl der Endabschnitt des Spitzendes (1) des zweiten Rohres als auch der Endabschnitt des Muffenendes (4) des ersten Rohres über eine Länge, die mindestens der axialen Länge des Überlappungsbereichs (15) entspricht, eine Glattheitsschicht (17) aufweisen, die vorzugsweise aus faserverstärktem Kunststoff hergestellt ist und vorzugsweise ein Mischungsverhältnis von Harz zu Fasern von 25 zu 100, weiter vorzugsweise von 35 zu 100 aufweist, wobei die Glattheitsschicht (17) eine Dicke von maximal 0,4 mm, weiter vorzugsweise eine Dicke von maximal 0,2 mm aufweist.

15. Rohrverbindung nach einem der Ansprüche 7 bis 14, **dadurch gekennzeichnet, dass** der Dichtungsring (8) eine Härte aufweist, die einer Shore-Härte von vorzugsweise mindestens 20 Shore und höchstens 90 Shore, weiter vorzugsweise von mindestens 40 Shore und höchstens 70 Shore, entspricht.

16. Rohrverbindung nach einem der Ansprüche 7 bis 15, **dadurch gekennzeichnet, dass** zwischen dem Dichtungsring (8) und der äußeren Mantelfläche (9) des Spitzendes (1) des zweiten Rohres und/oder zwischen dem Dichtungsring (8) und der inneren Mantelfläche (13) des Muffenendes (4) des ersten Rohres eine Haftreibungszahl von mindestens 0,3, vorzugsweise von mindestens 0,4 vorliegt.
